# EUROPÄISCHE PATENTSCHRIFT

(11) **EP 2 174 121 B1**
(45) Veröffentlichungstag und Bekanntmachung des Hinweises auf die Patenterteilung: **21.09.2016**
(21) Anmeldenummer: 08774694.7
(22) Anmeldetag: 03.07.2008
(51) Int. Cl.: G01N 27/414

(54) **VORRICHTUNG UND VERFAHREN ZUR DETEKTIERUNG VON SUBSTANZEN**
APPARATUS AND METHOD FOR DETECTING SUBSTANCES
DISPOSITIF ET PROCÉDÉ DE DÉTECTION DE SUBSTANCES

(30) Priorität: 24.07.2007 DE 102007034330
(43) Veröffentlichungstag der Anmeldung: 14.04.2010
(73) Patentinhaber: Robert Bosch GmbH, 70442 Stuttgart (DE)
(72) Erfinder: LIEMERSDORF, Dirk, 70839 Gerlingen (DE); FIX, Richard, 70839 Gerlingen (DE); WOLST, Oliver, 72622 Nuertingen (DE); MARTIN, Alexander, 70469 Stuttgart (DE); LE-HUU, Martin, 70825 Korntal (DE)
(86) Internationale Anmeldenummer: PCT/EP2008/058571
(87) Internationale Veröffentlichungsnummer: WO 2009/013101

(56) Entgegenhaltungen:
- EP-A- 0 155 725
- WO-A-03/050526
- WO-A-2005/103667
- US-A1- 2005 230 245
- MORGENSHTEIN A ET AL: "Wheatstone-Bridge readout interface for ISFET/REFET applications" SENSORS AND ACTUATORS B, ELSEVIER SEQUOIA S.A., LAUSANNE, CH, Bd. 98, Nr. 1, 1. März 2004 (2004-03-01), Seiten 18-27, XP004493649 ISSN: 0925-4005

## Beschreibung

### Stand der Technik

Die Erfindung betrifft eine Vorrichtung zur Detektierung mindestens einer in einem Fluidstrom enthaltenen Substanz gemäß Anspruch 1 sowie ein Verfahren zur Detektierung mindestens einer in einem Fluidstrom enthaltenen Substanz unter Verwendung der Vorrichtung gemäß Anspruch 8 bzw. 12.

Zur Detektierung von in einem Fluidstrom enthaltenen Substanzen, insbesondere von Gasen in einem Gasstrom werden gassensitive Feldeffekttransistoren auf Halbleiterbasis eingesetzt. Im Allgemeinen führt die Beaufschlagung mit der zu detektierenden Substanz, beispielsweise ein Gas oder eine Flüssigkeit bzw. ein Gas- oder Flüssigkeitsgemisch, zu einer Veränderung der Kanalimpedanz und somit zu einer Veränderung des von der Source-Elektrode zur Drain-Elektrode durch den Feldeffekttransistor fließenden Stroms, dem so genannten Kanalstrom. Werden Halbleitermaterialien mit einer großen Bandlücke, d.h. einer Bandlücke von mehr als 3eV verwendet, beispielsweise Gallium-Nitrid oder SiliziumCarbid, ermöglicht dies prinzipiell den Einsatz der gassensitiven Feldeffekttransistoren für Sensorikanwendungen bei Temperaturen bis zu 800°C.

Am gewählten Arbeitspunkt des gassensitiven Feldeffekttransistors ist der Kanalstrom ohne Beaufschlagung durch die zu detektierende Substanz, das so genannte Nullsignal oder der Offset, oft um Größenordnungen von üblicherweise 10³ höher als die Kanalstromänderung durch die Beaufschlagung (Signal). Dies stellt aufgrund des schlechten Signal-Offset-Verhältnisses hohe Anforderungen an die Strommessung. Zudem ergibt sich das Problem, dass der Offset von äußeren Störeinflüssen beeinflusst werden kann. Die äußeren Störeinflüsse ergeben sich z.B. durch Temperaturänderungen oder Sensordegradation, die nicht auf der Anwesenheit von zu detektierenden Substanzen beruhen. Aufgrund des gegebenen Signal-Offset-Verhältnisses kann die Änderung des Kanalstroms durch Störeinflüsse in der gleichen Größenordnung oder im ungünstigsten Fall sogar größer sein als die Änderung, die durch die Anwesenheit der zu detektierenden Substanz erfolgt. Da die Störeinflüsse nicht vollständig ausgeschlossen werden können, wird der damit verbundene Fehler des Messsignals groß und verhindert im ungünstigsten Fall eine nutzbare Messung der zu detektierenden Substanz.

Aus US-B 6,883,364 ist es bekannt, bei Handgeräten zur Detektierung von Gasen unter anderem Feldeffekttransistoren als geeignete Sensoren zur Detektierung von Gasen einzusetzen. Üblicherweise werden hier jedoch gassensitive Widerstände, so genannte Chemo-Resistoren, eingesetzt. Durch einen Referenz-Widerstand mit möglichst kleiner Temperaturdrift werden ein Spannungsteiler und eine Stromlimitierung realisiert. Die Schaltung eignet sich jedoch nicht zur Drift-Kompensation und zur Kompensation des Offsets der Chemo-Resistoren.

Der Einsatz eines Gassensors, der auf einem Feldeffekttransistor beruht und aus einer gassensitiven Schicht und einer Referenzschicht besteht, deren Austrittsarbeitsänderungen Feldeffektstrukturen ansteuern, ist aus WO-A 2005/103667 bekannt. Die Referenzschicht dient dazu, Querempfindlichkeiten, d.h. eine Empfindlichkeit auf andere Gase als das gewünschte Zielgas, zu eliminieren. Das Problem, dass der Offset um mehrere Größenordnungen höher als die Kanalstromänderung ist und somit die Kanalstromänderung gegebenenfalls nicht größer ist als die Änderung durch Störeinflüsse, wird durch WO-A 2005/103667 nicht gelöst.

A. Morgenshtein et al. "Wheatstone-Bridge readout interface for ISFET/REFET applications", Sensors and Activators (2004), 18-27 offenbart eine Schaltungsanordnung, die auf Basis einer wheatstoneschen Brückenschaltung aufgebaut ist. Die beschriebene Schattungsanordnung umfasst mindestens vier Feldeffekttransistoren, insbesondere ein Paar ISFET's und ein Paar REFET's, welche in einer bestimmten Weise miteinander verschaltet sind. Der beschriebene ISFET-Sensor wandelt eine pH-Wertänderung in eine entsprechende Änderung eines Kanalwiderstandes um, wobei die wheatstonesche Brückenschaltung geeignet ist, eine Temperaturkompensation darzustellen. Das Dokument offenbart somit alle Merkmale des Oberbegriffs des Anspruchs 1.

### Offenbarung der Erfindung

### Vorteile der Erfindung

Die erfindungsgemäß ausgebildete Vorrichtung zur Detektierung mindestens einer in einem Fluidstrom enthaltenen Substanz umfasst mindestens einen Feldeffekttransistor als Messsensor sowie mindestens einen als Referenzelement wirkenden Feldeffekttransistor. Die Feldeffekttransistoren weisen jeweils mindestens eine Source-Elektrode, eine Drain-Elektrode und eine Gate-Elektrode auf. Die Gate-Elektrode des als Messsensor wirkenden Feldeffekttransistors ist sensitiv hinsichtlich der mindestens einen zu detektierenden Substanz und die Gate-Elektrode des als Referenzelement wirkenden Feldeffekttransistors ist im Wesentlichen unempfindlich gegenüber der mindestens einen zu detektierenden Substanz. Erfindungsgemäß sind die Source-Elektrode eines der Feldeffekttransistoren und die Drain-Elektrode des anderen der Feldeffekttransistoren miteinander und mit einer Signalleitung verbunden. Weiterhin ist zwischen der Drain Elektrode des ersten Feldeffekttransistors und der Source Elektrode des zweiten Feldeffekttransistors eine Spannung angelegt. Der Strom durch die Signalleitung ist somit die Differenz der Kanalströme der beiden Feldeffekttransistoren (Differenzstrom).

Vorteil der erfindungsgemäßen Schaltung ist es, dass der als Referenzelement wirkende Feldeffekttransistor dieselben Störeinflüsse, z.B. Temperaturschwankungen oder Druckschwankungen, erfährt, wie der als Messsensor wirkende Feldeffekttransistor. Bei geeigneter Wahl der Spannungen der Drain-Elektrode des einen Feldeffekttransistors, der Signalleitung, der Source Elektrode des anderen Feldeffekttransistors sowie der Spannung an der Gatelektrode beider Feldeffekttransistoren ist auf diese Weise eine Kompensation erster Ordnung des Messsignals (Kanalstrom) des Messsensors möglich. Das heißt, dass die Kompensation direkt im Sensor durch die Verschaltung eines oder mehrerer gegenüber der zu detektierenden Substanz empfindlicher Feldeffekttransistoren mit einem oder mehreren als Referenzelement wirkenden Feldeffekttransistoren erfolgt und insbesondere nicht nur Offset sondern auch Störeinflüsse kompensiert werden. Hierdurch wird der Einfluss der Störungen auf das Messsignal verringert und es wird ein wesentlich verbessertes Signal-Rausch-Verhältnis erzielt.

Bei einer Kompensation nullter Ordnung wird demgegenüber in einer Auswerteelektronik ein konstanter Strom abgezogen, der auf das Nullsignal des als Messsensor wirkenden Feldeffekttransistors angepasst ist. Die Kompensation nullter Ordnung ist dabei unabhängig von der Anwesenheit von zu detektierenden Substanzen, jedoch wird hierdurch nicht das Signal-Rausch-Verhältnis verbessert, da die Schwankungen des Offsets aufgrund der Störungen zu einer Fehlkompensation und somit zum gleichen absoluten Fehler des Messsignals führen. Bei der erfindungsgemäßen Verschaltung und der dadurch realisierten Kompensation erster Ordnung wird die Signalmessung vereinfacht und das Signal-Rausch-Verhältnis stark verbessert, da Störungen das Messsignal nur noch in zweiter Ordnung, d.h. der Beeinflussung der Sensorantwort auf die zu detektierenden Substanzen, jedoch nicht mehr in erster Ordnung, d.h. der Änderung des Offsets beeinflussen.

Hierdurch wird das Messsignal des als Messsensor wirkenden Feldeffekttransistors gegenüber unerwünschten Komponenten bzw. Störeinflüssen kompensiert. Unerwünschte Komponenten bzw. Störeinflüsse sind alle Einflüsse auf das Messsignal, die nicht durch die Wechselwirkung der zu detektierenden Substanz mit der Gate-Elektrode des als Messsensor wirkenden Feldeffekttransistors hervorgehoben werden. Unerwünschte Komponenten sind z.B. der Signal-Offset, die Temperaturabhängigkeit des Signalstromes und die Abweichung des Signalstromes baugleicher Feldeffekttransistoren aufgrund von Prozessvariationen in der Transistor-Herstellung. Eine zu kompensierende Größe ist die Alterung und/oder morphologische/strukturelle Degradation des als Messsensor wirkenden Feldeffekttransistors über die Betriebsdauer. Auch ist die Querempfindlichkeit gegenüber der Anwesenheit von Substanzen, die nicht zu den zu detektierenden Substanzen gehören unerwünscht. Eine Kompensation beinhaltet auch die Verringerung des Anteils der unerwünschten Komponenten am Messsignal.

Der als Referenzelement wirkende Feldeffekttransistor und der als Messsensor wirkende Feldeffekttransistor sind vorzugsweise ein MOSFET, ein MISFET, ein MESFET, ein HEMT oder ein Suspended-Gate-FET. Auch können der als Referenzelement wirkende Feldeffekttransistor und der als Messsensor wirkende Feldeffekttransistor jede beliebige andere gassensitive Ausführung eines Feldeffekttransistors sein. Der als Messsensor wirkende Feldeffekttransistor wird vorzugsweise aus einer epitaktisch gewachsenen Materialkomposition der Elemente der Gruppe III und Gruppe V bzw. Gruppe IV-Elemente, bevorzugt Silizium, GaAs, SiC, GaN, AlGaN/GaN oder jedem anderen in Frage kommenden Halbleitermaterial hergestellt.

In einer bevorzugten Ausführungsform sind der als Messsensor wirkende Feldeffekttransistor und der als Referenzelement wirkende Feldeffekttransistor baugleich. Zudem haben sie die gleichen Proportionen, die gleichen Abmessungen und Dotierungen/Dotierungskonzentrationen sowie Dotierungsverläufe, bis auf die Passivierungsschicht des Referenzelements. Weiterhin sind die beiden Feldeffekttransistoren vorzugsweise nebeneinander und/oder wärmeleitend miteinander gekoppelt. Der als Referenzelement wirkende Feldeffekttransistor weist idealerweise das gleiche Verhalten wie der als Messsensor wirkende Feldeffekttransistor auf. Dabei ist der als Referenzelement wirkende Feldeffekttransistor idealerweise unempfindlich, auf jeden Fall aber deutlich unempfindlicher gegenüber den zu detektierenden Substanzen als der als Messsensor wirkende Feldeffekttransistor.

In einer Ausführungsform ist der als Referenzelement wirkende Feldeffekttransistor im Aufbau zum verwendeten als Messsensor wirkenden Feldeffekttransistor identisch, er reagiert jedoch nicht auf die Anwesenheit der zu detektierenden Substanzen. Die Unempfindlichkeit wird erfindungsgemäß durch eine zusätzliche Passivierung der katalytisch aktiven Gate-Elektrode des als Referenzelement wirkenden Feldeffekttransistors erreicht. Auf diese Weise können die zu detektierenden Substanzen nicht mehr mit der Gate-Elektrode wechselwirken. Zur Passivierung wird die Gate-Elektrode des Referenzelement wirkenden Feldeffekttransistors mit einer Passivierungsschicht aus einem dielektrischen bzw. gasundurchlässigen Material beschichtet, das gegen die mindestens eine zu detektierende Substanz dicht ist oder als Diffusionssperre wirkt. Die Schichtdicke liegt z.B. zwischen 1nm und 100µm, bevorzugt im Bereich zwischen 10nm und 1µm. Als Material können sowohl eine Keramik als auch organische Polymere, bevorzugt jedoch Silizium-Nitrid, SiliziumCarbid, Silizium-Dioxid, Aluminiumoxid und/oder Zirkonoxid oder Mischungen dieser Materialen, verwendet werden. Zudem sind auch Verbundwerkstoffe aus keramisch/keramischen bzw. keramisch/polymeren Werkstoffen einsetzbar. Auch jedes weitere, dem Fachmann bekannte Material, das sich zur Passivierung eignet, kann eingesetzt werden. Die Passivierung sollte die elektrischen Eigenschaften des als Referenzelement wirkenden Feldeffekttransistors möglichst wenig bzw. gar nicht beeinflussen.

Die Passivierung der Gate-Elektrode des als Referenzelement wirkenden Feldeffekttransistors erfolgt z.B. durch Abscheidung des Passivierungsmaterials mittels in der Halbleitertechnologie etablierter mikrostrukturierter Dünnschichtverfahren, z.B. Aufdampfen oder Aufsputtern. Gegebenenfalls werden Temperschritte angefügt, die ein Dichtsintern der Passivierungsschicht unterstützen. Ebenfalls ist eine nasschemische Abscheidung des Passivierungsmaterials mit anschließender Temperaturbehandlung möglich. Die erhöhte Temperatur der Temperaturbehandlung bewirkt zum einen das Verdampfen der flüchtigen Lösungsmittel und zum anderen ein Dichtsintern des deponierten Passivierungsmaterials. Eine mögliche Abscheidung des Passivierungsmaterials kann ebenfalls in einem strukturierenden Dickschichtverfahren durch z.B. Aufdrucken einer das Passivierungsmaterial enthaltenen Paste erfolgen. Nachfolgende Temperschritte unterstützen das Dichtsintern des Passivierungsmaterials.

In einer weiteren Ausführungsform weist die Passivierungsschicht mehrere Materialschichten auf. Diese können entweder in einem Abscheideschritt oder durch mehrmaliges Aufbringen des Passivierungsmaterials hergestellt werden. Wenn die Passivierungsschicht mehrere Materialschichten aufweist, so können diese aus unterschiedlichen Materialen gefertigt sein oder es ist auch möglich, mehrere Passivierungsschichten aus dem gleichen Material aufzutragen.

Wenn die Passivierungsschicht auf der Gate-Elektrode des als Referenzelement wirkenden Feldeffekttransistors nicht gegenüber den zu detektierenden Substanzen dicht ist, sondern als Diffusionssperre wirkt, führt dies ebenfalls dazu, dass die Gate-Elektrode des als Referenzelement wirkenden Feldeffekttransistors nicht mit den zu detektierenden Substanzen wechselwirkt, da diese das eigentliche Elektrodenmaterial nicht erreichen. Alternativ zum Aufbringen einer Passivierungsschicht ist es auch möglich, dass die GateElektrode aus einem Material gefertigt ist, das gegenüber der mindestens einen zu detektierenden Substanzen unempfindlich ist. Dies wird z.B. durch die Verwendung eines anderen Materials für die Gate-Elektrode und/oder durch eingestellte Porositäten der Gatematerialien bzw. der gesamten Gate-Elektrode erreicht. Insbesondere ist die Gate-Elektrode dann unempfindlich, wenn diese eine ausreichend dicke und nicht poröse Metallisierung aufweist. Bei der Verwendung von anderen Materialien für die Gate-Elektrode ist es möglich, dass diese zwar gegenüber den zu detektierenden Substanzen unempfindlich ist, jedoch nicht gegenüber anderen im Fluidstrom enthaltenen Substanzen.

In einer bevorzugten Ausführungsform sind erfindungsgemäß die Source-Elektrode eines der Feldeffekttransistoren (im folgenden FET1) und die Drain-Elektrode des anderen der Feldeffekttransistoren (im folgenden FET2) miteinander und mit einer Signalleitung verbunden. Zwischen der Drain Elektrode von FET1 und der Source Elektrode von FET2 ist eine konstante Spannung U₁ angelegt. Das elektrische Potential der Signalleitung liegt genau in der Mitte zwischen dem elektrischen Potential der Drain Elektrode von FET1 und der Source Elektrode von FET2. Daraus folgt, dass die Source-Drain Spannung von FET1 gleich der Source-Drain-Spannung von FET2 ist und die Spannung U₁ genau das doppelte einer der Source-Drain-Spannungen eines der Feldeffekttransistoren FET1 oder FET2 beträgt. In der hier beschriebenen Ausführungsform liegt an beiden Feldeffekttransistoren die gleiche Gate-Spannung U_{G} zwischen der Source-Elektrode und Gate-Elektrode des jeweiligen Feldeffekttransistors an. Falls die Feldeffekttransistoren selbstleitende Transistoren sind, d.h. bei einer Gate-Spannung von 0V der Halbleiterkanal nicht abgeschnürt ist, kann die Gate-Spannung 0V betragen. Im Allgemeinen ist die Gate-Spannung jedoch unterschiedlich von 0V. In der hier beschriebenen Ausführungsform haben beide Feldeffekttransistoren idealerweise die gleiche elektrische Charakteristik. Aufgrund der identischen Gate-Spannung und der identischen Source-Drain-Spannung für die beiden Feldeffekttransistoren, fließt bei beiden Feldeffekttransistoren der gleiche Strom zwischen Source- und Drain-Elektrode, falls die Feldeffekttransistoren nicht durch den Fluidstrom beeinflusst werden (Offset Strom). Folglich fließt in diesem speziellen Fall kein Strom durch die Signalleitung. In der hier beschriebenen Ausführungsform wirkt des weiteren der eine Feldeffekttransistor als Messsensor und der andere Feldeffekttransistor als Referenzelement. Wird der Kanalstrom des als Messsensor wirkenden Feldeffekttransistors durch die Anwesenheit von im Fluidstrom vorhandenen Substanzen beeinflusst, kommt es zu einer Differenz im Kanalstrom zwischen den beiden Feldeffekttransistoren. Dieser Differenzstrom fließt durch die Signalleitung. Reagieren beide Feldeffekttransistoren gleichartig auf Störeinflüsse, kommt es durch Störeinflüsse nicht zu einer Differenz im Kanalstrom der beiden Feldeffekttransistoren. In der hier beschriebenen Ausführungsform wird der Strom in der Signalleitung als Messsignal verwendet. Dieses Messsignal ist wie beschrieben in erster Ordnung kompensiert bezüglich Offset und Störeinflüsse.

Um eine durch Prozessungenauigkeit und durch die gasdichte Passivierung der Gate-Elektrode des als Referenzelement wirkenden Feldeffekttransistors hervorgerufene Abweichung zwischen dem als Referenzelement wirkenden Feldeffekttransistor und dem als Messsensor wirkenden Feldeffekttransistor zu korrigieren, unterscheidet sich in einer bevorzugten Ausführungsform die Gate-Spannung des als Referenzelement wirkenden Feldeffekttransistors von der Gate-Spannung des als Messsensor wirkenden Feldeffekttransistors. Diese Differenz in der Gate-Spannung der beiden Feldeffekttransistoren wird im Folgenden Kompensationsspannung genannt. Die Kompensationsspannung wird derart eingestellt, dass bei gewünschten äußeren Bedingungen, d.h. der Temperatur, dem Druck usw., und ohne Anwesenheit der zu detektierenden Substanzen kein Strom durch die Signalleitung fließt. Ein auftretendes Messsignal ist dann wiederum auf die Anwesenheit der zu detektierenden Substanzen oder auf Störungen zweiter Ordnung zurückzuführen.

In einer weiteren Verfahrensvariante wird nicht der Strom durch die Signalleitung als Messsignal genutzt sondern der Strom in der Signalleitung konstant gehalten, indem die Spannung der Spannungsquelle, die mit der Gate-Elektrode des als Referenzsensor wirkenden Feldeffekttransistors verbunden ist, geändert wird. Die Gate-Spannung des Messsensors wird konstant gehalten. Die Änderung der Gate-Spannung des Referenzelements stellt das Messsignal dar. In einer weiteren Variante kann auch die Gate-Spannung des als Messsensor wirkenden Feldeffekttransistors variiert werden, um den Strom in der Signalleitung konstant zu halten. Die Gate-Spannung des Referenzelementes wird dann konstant gehalten und das Messsignal ist die Änderung der Gate-Spannung des als Messsensor wirkenden Feldeffekttransistors stellt dann das Messsignal dar.

In einer alternativen Verfahrensvariante wird der Strom in der Signalleitung konstant gehalten, indem das elektrische Potential der Signalleitung entsprechend geändert wird. Dabei bleiben die Gate-Spannungen der beiden Feldeffekttransistoren konstant. Das Messsignal ist die Änderung des elektrischen Potentials der Signalleitung, die erforderlich ist, um den Strom konstant zu halten.

Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: Ein Schaltbild einer erfindungsgemäßen Vorrichtung in einer ersten Ausführungsform,
- Figur 2: Ein Schaltbild einer erfindungsgemäßen Vorrichtung in einer zweiten Ausführungsform,
- Figur 3: Ein Schaltbild einer erfindungsgemäßen Vorrichtung in einer dritten Ausführungsform,
- Figur 4: Eine alternative Verschaltung der in Figur 1 dargestellten Ausführungsform,
- Figur 5: Eine alternative Verschaltung der in Figur 2 dargestellten Ausführungsform.

### Ausführungsformen der Erfindung

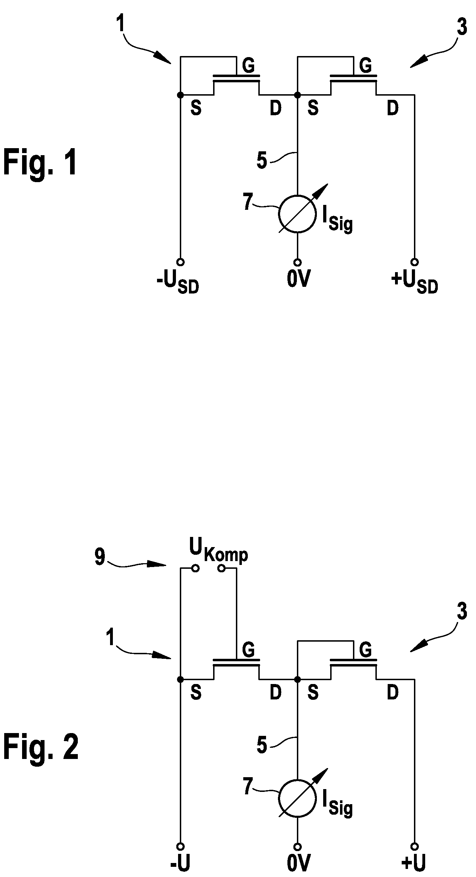

In Figur 1 ist ein Schaltbild einer erfindungsgemäßen Vorrichtung in einer ersten Ausführungsform dargestellt.

Bei der in Figur 1 dargestellten Ausführungsform sind ein erster Feldeffekttransistor 1 und ein zweiter Feldeffekttransistor 3 miteinander verschaltet. Hierzu sind die Source-Elektrode S des zweiten Feldeffekttransistors 3 und die Drain-Elektrode D des ersten Feldeffekttransistors 1 miteinander verbunden. Weiterhin sind die Drain-Elektrode D des ersten Feldeffekttransistors 1 und die Source-Elektrode S des zweiten Feldeffekttransistors 3 mit einer Signalleitung 5 verbunden.

Der erste Feldeffekttransistor 1 ist vorzugsweise ein als Referenzelement wirkender Feldeffekttransistor und der zweite Feldeffekttransistor 3 ein als Messsensor wirkender Feldeffekttransistor. Bei dem als Referenzelement wirkenden ersten Feldeffekttransistor 1 ist üblicherweise - wie vorstehend beschrieben - die Gate-Elektrode G gegenüber einer zu detektierenden Substanz in einem Fluidstrom unempfindlich. Dies erfolgt z.B. durch Passivierung der Gate-Elektrode G.

Die Detektion der zu detektierenden in einem Fluidstrom enthaltenen Substanz erfolgt bei einer Source-Gate-Spannung von 0V und einer konstanten Source-Drain-Spannung U_{SD}. Die Source-Gate-Spannung von 0V wird durch Verbinden der Source-Elektrode S mit der Gate-Elektrode G des als Messsensor wirkenden zweiten Feldeffekttransistors 3 erzielt. Die Source-Drain-Spannung wird durch Anlegen einer von 0V verschiedenen Spannung U_{SD} an die Drain-Elektrode D des zweiten Feldeffekttransistors 3 erzielt.

An der Source-Elektrode S des als Referenzelement wirkenden ersten Feldeffekttransistors 1 wird eine Spannung von -U_{SD} angelegt. Die Source-Drain-Spannung des als Referenzelement wirkenden Feldeffekttransistors 1 ist somit genauso groß wie die Source-Drain-Spannung des als Messsensor wirkenden zweiten Feldeffekttransistors 3. Die Source-Gate-Spannung des als Referenzelement wirkenden ersten Feldeffekttransistors 1 ist ebenfalls 0V. Dies wird ebenso wie bei dem als Messsensor wirkenden zweiten Feldeffekttransistor 3 dadurch erzielt, dass die Source-Elektrode mit der Gate-Elektrode verbunden ist.

Die Signalmessung erfolgt durch die Messung des Stroms, der durch die Signalleitung 5 fließt. Hierzu sind in der Signalleitung 5 Mittel zur Messung des Stroms 7 vorgesehen. Als Mittel zur Strommessung 7 kann dabei jedes beliebige, dem Fachmann bekannte Messgerät verwendet werden. Dies erfolgt üblicherweise in der Signalauswerteeinheit.

Wenn der als Messsensor wirkende zweite Feldeffekttransistor 3 und der als Referenzelement wirkende erste Feldeffekttransistor 1 bis auf ihre Sensitivität bezüglich der zu detektierenden Substanzen identisch sind, entspricht der Nullsignal-Strom durch den Kanal des als Messsensor wirkenden zweiten Feldeffekttransistors 3 genau dem Kanalstrom des als Referenzelement wirkenden Feldeffekttransistors 1. Solange die zu detektierende Substanz nicht im Fluidstrom enthalten ist, fließt nur der Nullsignal-Strom durch den Kanal des als Messsensor wirkenden zweiten Feldeffekttransistors 3. Daher fließt nach der Kirchhoff'schen Knotenregel auch kein Strom durch die Signalleitung 5. Wenn beide Feldeffekttransistoren 1, 3 identisch auf Störeinflüsse reagieren, bleibt der Strom durch die Signalleitung unabhängig von den äußeren Parametern immer 0, solange keine zu detektierende Substanz vorhanden ist. Bei Anwesenheit der zu detektierenden Substanz ändert sich der Kanalstrom des als Messsensor wirkenden zweiten Feldeffekttransistors 3. Der Kanalstrom des als Referenzelement wirkenden ersten Feldeffekttransistors 1 ändert sich jedoch nicht. Diese Differenz bezüglich des Nullsignal-Stroms muss durch die Signalleitung 5 fließen. Der in der Signalleitung 5 gemessene Strom hängt folglich nur von der Anwesenheit der mindestens einen zu detektierenden Substanz ab und wird durch die in Figur 1 dargestellte Verschaltung mit dem als Referenzelement wirkenden ersten Feldeffekttransistor 1 bezüglich des Offsets des als Messsensor wirkenden zweiten Feldeffekttransistors 3 kompensiert und ist somit auch unabhängig von der Änderung des Offsets durch Störeinflüsse wie diese z.B. durch Temperatur- oder Druckänderungen auftreten können.

Wenn der als Referenzelement wirkende erste Feldeffekttransistor 1 eine Gate-Elektrode G mit einer Passivierungsschicht aufweist, ist davon auszugehen, dass eine vollkommene Übereinstimmung zwischen dem ersten Feldeffekttransistor 1 und dem zweiten Feldeffekttransistor 3 nicht erreicht werden kann. Daher besteht eine Abweichung zwischen dem Offset-Strom des als Messsensor wirkenden zweiten Feldeffekttransistors 3 und dem Kanalstrom des als Referenzelement wirkenden ersten Feldeffekttransistors 1. Dieser Fehler wird auch Kompensationsfehler genannt. Die Abweichung trägt auch zum Strom durch die Signalleitung 5 bei, ist aber deutlich kleiner als das ursprüngliche Nullsignal. Das Messsignal hängt daher nur noch bezüglich des Kompensationsfehlers und nicht mehr bezüglich des Nullsignals selbst von Störeinflüssen ab. Somit weist das Messsignal nur noch einen Fehler zweiter Ordnung auf.

In Figur 2 ist eine erfindungsgemäß ausgebildete Vorrichtung in einer zweiten Ausführungsform dargestellt.

Bei der in Figur 2 dargestellten Ausführungsform ist die Gate-Elektrode des als Referenz-element wirkenden ersten Feldeffekttransistors 1 mit einem Potentialanschluss einer ersten Spannungsquelle 9 verbunden. An der ersten Spannungsquelle 9 kann eine zusätzliche Kompensationsspannung U_{Komp} an die Gate-Elektrode des als Referenzelement wirkenden ersten Feldeffekttransistors 1 angelegt werden. Durch die Kompensationsspannung U_{Komp} ist es möglich, die durch Prozessungenauigkeiten und die Passivierung der Gate-Elektrode des als Referenzelement wirkenden Feldeffekttransistors 1 hervorgerufene Abweichung zwischen den Kanalspannungen des als Referenzelement wirkenden ersten Feldeffekttransistors 1 und dem als Messsensor wirkenden zweiten Feldeffekttransistor 3 zu korrigieren. Die Kompensationsspannung U_{Komp} wird so eingestellt, dass bei gewünschten äußeren Bedingungen, d.h. Temperatur, Druck, usw. und ohne Anwesenheit der mindestens einen zu detektierenden Substanz kein Strom durch die Signalleitung 5 fließt. Ein Messsignal in der Signalleitung 5 ist dann wiederum nur auf die Anwesenheit der mindestens einen zu detektierenden Substanz oder auf Störungen zweiter Ordnung zurückzuführen.

Neben der in Figur 2 dargestellten Ausführungsform, bei der die Kompensationsspannung U_{Komp} an der Gate-Elektrode G des als Referenzelement wirkenden ersten Feldeffekttransistors 1 anliegt, ist es auch möglich, dass die Kompensationsspannung U_{Komp} an Gate-Elektrode G des als Messsensor wirkenden zweiten Feldeffekttransistors 3 angelegt wird.

Neben den in den Figuren 1 und 2 dargestellten Ausführungsformen, bei denen mindestens ein Feldeffekttransistor 1, 3 mit einer Source-Gate-Spannung von 0V betrieben wird, ist es auch möglich, dass der als Messsensor wirkende zweite Feldeffekttransistor 3 mit einer von Null verschiedenen Source-Gate-Spannung U_{SG} betrieben wird. Hierzu ist an die Gate-Elektrode G des zweiten Feldeffekttransistors 3 eine zweite Spannungsquelle 11 angeschlossen. Wenn der als Messsensor wirkende zweite Feldeffekttransistor 3 mit einer von 0V verschiedenen Source-Gate-Spannung U_{SG} betrieben wird, ist es für eine vollständige Kompensation des Offsets notwendig, dass auch der als Referenzelement wirkende erste Feldeffekttransistor 1 mit einer von 0V verschiedenen Source-Gate-Spannung U_{SG} betrieben wird. Die Source-Gate-Spannung des als Referenzelement wirkenden Feldeffekttransistors 1 und des als Messsensor wirkenden zweiten Feldeffekttransistors 3 unterscheiden sich vorzugsweise lediglich hinsichtlich einer zusätzlichen Kompensationsspannung U_{Komp} zur Kompensation von Prozessungenauigkeiten, die durch die Passivierung der Gate-Elektrode G des Referenzelement wirkenden ersten Feldeffekttransistors 1 auftreten können.

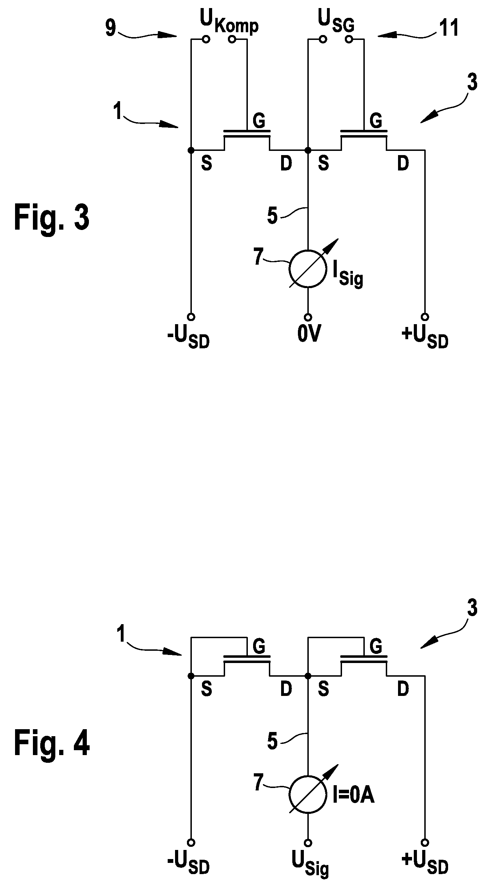

Bei der in Figur 4 dargestellten alternativen Verschaltung der in Figur 1 dargestellten Ausführungsform erfolgt die Signalerfassung nicht durch eine Änderung des Stroms in der Signalleitung 5 sondern durch eine Änderung der Spannung in der Signalleitung 5. Ebenso wie in der in Figur 1 dargestellten Ausführungsform liegt die Source-Elektrode S des als Referenzelement wirkenden ersten Feldeffekttransistors 1 auf einer festen Spannung -U_{SD} und die Drain-Elektrode D des als Messsensor wirkenden zweiten Feldeffekttransistors 3 auf einer betragsmäßig gleichen aber positiven Spannung +U_{SD}. Der Strom durch die Signalleitung 5 wird konstant bei 0A gehalten, indem die an der Signalleitung 5 angelegte Spannung U_{Sig} verändert wird. Wenn keine zu detektierende Substanz im Fluidstrom enthalten ist, sind die Kanalimpedanzen des als Referenzelement wirkenden ersten Feldeffekttransistors 1 und des als Messsensor wirkenden zweiten Feldeffekttransistors 3 identisch und das notwendige Potential der Signalleitung 5 liegt bei 0V. Eine Beaufschlagung des als Messsensor wirkenden zweiten Feldeffekttransistors 3 mit der mindestens einen zur detektierenden Substanz führt zu einer Änderung der Kanalimpedanz. Um den Strom in der Signalleitung 5 dennoch konstant zu halten, ist es notwendig, die Signalspannung U_{Sig} zu verändern. Dadurch fallen über die Feldeffekttransistoren 1, 3 unterschiedliche Spannungen ab, wodurch die unterschiedilchen Kanalimpedanzen ausgeglichen werden. Da äußere Störeinflüsse die Kanalimpedanz sowohl des als Messsensor wirkenden zweiten Feldeffekttransistors 3 als auch des als Referenzelement wirkenden ersten Feldeffekttransistors 1 im Idealfall gleichermaßen ändern, beeinflussen diese nicht die resultierende Signalspannung U_{Sig}. Die Signalspannung U_{Sig}, die notwendig ist, um den Strom in der Signalleitung 5 konstant zu halten, dient als Messsignal und hängt in erster Ordnung nur von der mindestens einen zu detektierenden Substanz ab. Auch bei der in Figur 4 dargestellten Ausführungsform, bei der der Strom in der Signalleitung 5 konstant gehalten wird, ist es möglich, gegebenenfalls auftretende Unterschiede zwischen dem als Referenzelement wirkenden ersten Feldeffekttransistor 1 und dem als Messsensor wirkenden zweiten Feldeffekttransistor 3 auszugleichen, indem entweder asymmetrische Spannungen U_{SD} gewählt werden, d.h. dass der Betrag der an der Source-Elektrode S des als Referenzelement wirkenden ersten Feldeffekttransistor 1 -U_{SD} sich von der an der Drain-Elektrode D des als Messsensor wirkenden zweiten Feldeffekttransistors 3 +U_{SD} unterscheidet oder dass ein Konstantstrom in der Signalleitung 5 ungleich Null gewählt wird. Weiterhin ist es auch möglich, für beide Feldeffekttransistoren 1, 3 einen anderen Arbeitspunkt, d.h. eine Source-Gate-Spannung ungleich Null zu wählen. Hierzu werden - wie in Figur 3 dargestellt - an die Gate-Elektroden G Spannungsquellen 9, 11 angeschlossen, mit denen eine von Null verschiedene Spannung an die Gate-Elektroden angelegt werden kann.

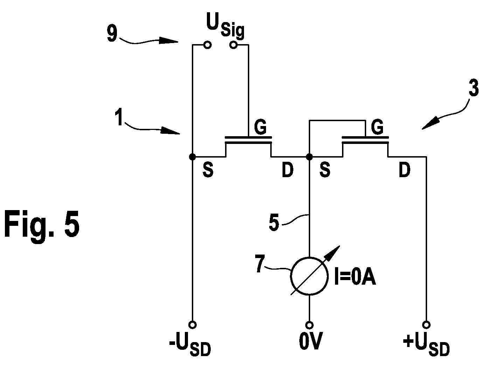

In Figur 5 ist eine Alternative Verschaltung zu der in Figur 2 dargestellten Ausführungsform dargestellt.

Ebenso wie in der in Figur 4 dargestellten Ausführungsform wird auch bei der in Figur 5 dargestellten Ausführungsform der Strom in der Signalleitung 5 konstant gehalten. Gleichzeitig wird an der Signalleitung 5 ein Potential von 0V angelegt.

Um den Strom in der Signalleitung 5 konstant zu halten ist an der Gate-Elektrode des als Referenzelement wirkenden ersten Feldeffekttransistors 1 eine Spannungsquelle 9 angeschlossen. Durch Änderung der Spannung an der Spannungsquelle 9 wird der Strom in der Signalleitung 5 konstant gehalten. Somit wird die Signalspannung U_{Sig} an der ersten Spannungsquelle 9 abgegriffen. Dies ist möglich, da eine Änderung der Source-Gate-Spannung die Kanalimpedanz des als Referenzelement wirkenden Feldeffekttransistors 1 ändert. Wenn die Impedanzen der Kanäle des als Referenzelement wirkenden ersten Feldeffekttransistors 1 und des als Messsensor wirkenden zweiten Feldeffekttransistors 3 gleich sind, fließt kein Strom durch die Signalleitung 5. Aus diesem Grund muss die Source-Gate-Spannung des als Referenzelement wirkenden Feldeffekttransistors 1 genau die gleiche Änderung der Kanalimpedanz im als Referenzelement wirkenden Feldeffekttransistor 1 bewirken, wie es die zu detektierenden Substanzen am als Messsensor wirkenden Feldeffekttransistor 3 tun, um den Strom konstant zu halten. Daher kann die erforderliche Source-Gate-Spannung am als Referenzelement wirkenden Feldeffekttransistor 1 als Messgröße, d.h. als Signalspannung U_{Sig}, abgegriffen werden.

Störeinflüsse ändern im Allgemeinen die Kanalimpedanz beider Feldeffekttransistoren 1, 3 gleichermaßen und bewirken somit keine Änderung der Signalspannung U_{Sig}.

Neben der hier dargestellten Ausführungsform ist es auch möglich, dass an den als Messsensor wirkenden zweiten Feldeffekttransistor 3 eine von 0V ungleiche Source-Gate-Spannung angelegt wird. Dies bewirkt jedoch nur einen entsprechenden Signal-Offset im Messsignal. Weiterhin ist es auch möglich, den als Referenzelement wirkenden Feldeffekttransistor 1 mit einer konstanten Source-Gate-Spannung zu betreiben und den Strom in der Signalleitung 5 über eine variable Source-Gate-Spannung am als Messsensor wirkenden zweiten Feldeffekttransistor 3 zu steuern.

## Patentansprüche

1. Vorrichtung zur Detektierung mindestens einer in einem Fluidstrom enthaltenen Substanz, mindestens einen Feldeffekttransistor (3) als Messsensor sowie mindestens einen als Referenzelement wirkenden Feldeffekttransistor (1) umfassend, wobei die Feldeffekttransistoren (1, 3) jeweils mindestens eine Source-Elektrode (S), eine Drain-Elektrode (D) und eine Gate-Elektrode (G) aufweisen, die Gate-Elektrode des als Messsensor wirkenden Feldeffekttransistors (3) sensitiv hinsichtlich der mindestens einen zu detektierenden Substanz ist und die Gate-Elektrode (G) des als Referenzelement wirkenden Feldeffekttransistors (1) im Wesentlichen unempfindlich gegenüber der mindestens einen zu detektierenden Substanz ist, wobei die Source-Elektrode (S) eines der Feldeffekttransistoren (1, 3) und die Drain-Elektrode (D) des anderen der Feldeffekttransistoren (1, 3) miteinander und mit einer Signalleitung (5) verbunden sind, **dadurch gekennzeichnet, dass** die Gate-Elektrode (G) des als Referenzelement wirkenden Feldeffekttransistors (1) mit einer Passivierungsschicht versehen ist, wobei die Passivierungsschicht aus einer Keramik, einem Metall, einem organischen Polymer oder Mischungen dieser Materialien gebildet ist oder eine nicht-poröse Gatemetallisierung aufweist

2. Vorrichtung gemäß Anspruch 1, **dadurch gekennzeichnet, dass** der als Referenzelement wirkende Feldeffekttransistor (1) und der als Messsensor wirkende Feldeffekttransistor (3) ein MOSFET, ein MISFET, eine MESFET, ein HEMT oder ein Suspended-Gate-FET ist.

3. Vorrichtung gemäß Anspruch 1 oder 2, **dadurch gekennzeichnet, dass** die Gate-Elektrode (G) des als Referenzelement wirkenden Feldeffekttransistors (1) mit einem Potentialanschluss einer Spannungsquelle (9) verbindbar ist.

4. Vorrichtung gemäß einem der Ansprüche 1 bis 3, **dadurch gekennzeichnet, dass** die Gate-Elektrode (G) des als Messsensor wirkenden Feldeffekttransistors (3) mit einem Potentialanschluss einer Spannungsquelle (11) verbindbar ist.

5. Vorrichtung gemäß einem der Ansprüche 1 bis 4, **dadurch gekennzeichnet, dass** die Gate-Elektrode (G) des als Referenzelement wirkenden Feldeffekttransistors (1) mit einer Passivierungsschicht aus einer Keramik, einem Metall, einem organischen Polymer, oder Mischungen der genannten Materialien beschichtet ist, das gegen die mindestens eine zu detektierende Substanz dicht ist oder als Diffusionssperre wirkt.

6. Vorrichtung gemäß Anspruch 5, **dadurch gekennzeichnet, dass** die Passivierungsschicht mehrere Materialschichten aufweist.

7. Vorrichtung gemäß einem der Ansprüche 1 bis 4, **dadurch gekennzeichnet, dass** die Gate-Elektrode (G) des als Referenzelement wirkenden Feldeffekttransistors (1) eine 1 µm - 100 µm dicke, nicht poröse Gatemetallisierung aufweist, die gegen die mindestens eine zu detektierende Substanz dicht ist oder als Diffusionssperre wirkt.

8. Verfahren zur Detektierung mindestens einer in einem Fluidstrom enthaltenen Substanz unter Verwendung einer Vorrichtung nach einem der Ansprüche 1 bis 7, wobei an der Signalleitung (5) ein konstantes Potential angelegt wird und der in der Signalleitung (5) fließende Strom gemessen wird.

9. Verfahren nach Anspruch 8, **dadurch gekennzeichnet, dass** eine Spannungsquelle (9), mit der Gate-Elektrode (G) des als Referenzelement wirkenden Feldeffekttransistors (1) verbunden ist, und eine Kompensationsspannung aufweist.

10. Verfahren nach Anspruch 8 oder 9 **dadurch gekennzeichnet, dass** eine Spannungsquelle (11), die mit der Gate-Elektrode (G) des als Messsensor wirkenden Feldeffekttransistors (3) verbunden ist, und eine Spannungsquelle (9), die mit der die Gate-Elektrode (G) des als Referenzelement wirkenden Feldeffekttransistors (1) verbunden ist, eine von 0V verschiedene Spannung aufweist, wobei die Spannungsquelle (9), die mit der Gate-Elektrode (G) des als Referenzelement wirkenden Feldeffekttransistors (1) verbunden ist, entweder 0V Spannung, oder eine von 0V verschiedene Kompensationsspannung (U_{Komp}) aufweist.

11. Verfahren nach Ansprüchen 9-10, **dadurch gekennzeichnet, dass** zusätzlich der Strom in der Signalleitung (5) konstant gehalten wird, indem die Spannung einer der Spannungsquellen (9, 11), die mit einer der Gate-Elektroden (G) des als Referenzsensor wirkenden Feldeffekttransistors (1) oder des als Messsensor wirkenden Feldeffekttransistors (3) verbunden ist, geändert wird, wobei die Änderung der Spannung das Messsignal darstellt.

12. Verfahren zur Detektierung mindestens einer in einem Fluidstrom enthaltenen Substanz unter Verwendung einer Vorrichtung nach einem der Ansprüche 1 bis 7, **dadurch gekennzeichnet, dass** der Strom in der Signalleitung (5) konstant gehalten wird und als Messsignal das Potential der Signalleitung (5) gemessen wird, das erforderlich ist, um den Strom konstant zu halten.

## Claims

1. Apparatus for detecting at least one substance contained in a fluid flow, comprising at least one field effect transistor (3) as a measuring sensor and at least one field effect transistor (1) which acts as a reference element, wherein the field effect transistors (1, 3) each have at least a source electrode (S), a drain electrode (D) and a gate electrode (G), wherein the gate electrode of the field effect transistor (3) acting as the measuring sensor is sensitive to the at least one substance to be detected and the gate electrode (G) of the field effect transistor (1) acting as the reference element is essentially insensitive to the at least one substance to be detected, wherein the source electrode (S) of one of the field effect transistors (1, 3) and the drain electrode (D) of the other field effect transistor (1, 3) are connected to one another and to a signal line (5), **characterized in that** the gate electrode (G) of the field effect transistor (1) acting as the reference element is provided with a passivation layer, wherein the passivation layer is formed of a ceramic, a metal, an organic polymer or mixtures of said materials or has a non-porous gate metallization.

2. Apparatus according to Claim 1, **characterized in that** the field effect transistor (1) acting as the reference element and the field effect transistor (3) acting as the measuring sensor are a MOSFET, a MISFET, a MESFET, a HEMT or a suspended-gate FET.

3. Apparatus according to Claim 1 or 2, **characterized in that** the gate electrode (G) of the field effect transistor (1) acting as the reference element can be connected to a potential connection of a voltage source (9).

4. Apparatus according to one of Claims 1 to 3, **characterized in that** the gate electrode (G) of the field effect transistor (3) acting as the measuring sensor can be connected to a potential connection of a voltage source (11).

5. Apparatus according to one of Claims 1 to 4, **characterized in that** the gate electrode (G) of the field effect transistor (1) acting as the reference element is coated with a passivation layer made of a ceramic, a metal, an organic polymer or mixtures of said materials, which layer is impermeable to the at least one substance to be detected or acts as a diffusion barrier.

6. Apparatus according to Claim 5, **characterized in that** the passivation layer has a plurality of material layers.

7. Apparatus according to one of Claims 1 to 4, **characterized in that** the gate electrode (G) of the field effect transistor (1) acting as the reference element has a 1 µm - 100 µm thick, non-porous gate metallization which is impermeable to the at least one substance to be detected or acts as a diffusion barrier.

8. Method for detecting at least one substance contained in a fluid flow using an apparatus according to one of Claims 1 to 7, wherein a constant potential is applied to the signal line (5) and the current flowing in the signal line (5) is measured.

9. Method according to Claim 8, **characterized in that** a voltage source (9) is connected to the gate electrode (G) of the field effect transistor (1) acting as the reference element and has a compensation voltage.

10. Method according to Claim 8 or 9, **characterized in that** a voltage source (11) which is connected to the gate electrode (G) of the field effect transistor (3) acting as the measuring sensor and a voltage source (9) which is connected to the gate electrode (G) of the field effect transistor (1) acting as a reference element have a voltage which is different from 0 V, wherein the voltage source (9) which is connected to the gate electrode (G) of the field effect transistor (1) acting as the reference element has either a voltage of 0 V or a compensation voltage (U_{Komp}) that is different to 0 V.

11. Method according to Claims 9 - 10, **characterized in that** the current in the signal line (5) is additionally kept constant by changing the voltage of one of the voltage sources (9, 11) which is connected to one of the gate electrodes (G) of the field effect transistor (1) acting as the reference sensor or of the field effect transistor (3) acting as the measuring sensor, wherein the change in the voltage is the measurement signal.

12. Method for detecting at least one substance contained in a fluid flow using an apparatus according to one of Claims 1 to 7, **characterized in that** the current in the signal line (5) is kept constant and that potential of the signal line (5) which is needed to keep the current constant is measured as the measurement signal.

## Revendications

1. Dispositif de détection d'au moins une substance contenue dans un courant de fluide, comprenant au moins un transistor à effet de champ (3) faisant office de capteur de mesure et au moins un transistor à effet de champ (1) faisant office d'élément de référence, les transistors à effet de champ (1, 3) présentant respectivement au moins une électrode de source (S), une électrode de drain (D) et une électrode de gâchette (G), l'électrode de gâchette du transistor à effet de champ (3) faisant office de capteur de mesure étant sensible à l'au moins une substance à détecter et l'électrode de gâchette (G) du transistor à effet de champ (1) faisant office d'élément de référence étant pour l'essentiel insensible à l'au moins une substance à détecter, l'électrode de source (S) de l'un des transistors à effet de champ (1, 3) et l'électrode de drain (D) de l'autre transistor à effet de champ (1, 3) étant reliées ensemble et avec une ligne de signal (5), **caractérisé en ce que** l'électrode de gâchette (G) du transistor à effet de champ (1) faisant office d'élément de référence est munie d'une couche de passivation, la couche de passivation étant constitué d'une céramique, d'un métal, d'un polymère organique ou des mélanges des matériaux mentionnés ou présente une métallisation de gâchette non poreuse.

2. Dispositif selon la revendication 1, **caractérisé en ce que** le transistor à effet de champ (1) faisant office d'élément de référence et le transistor à effet de champ (3) faisant office de capteur de mesure est un MOSFET, un MISFET, un MESFET, un HEMT ou un FET à gâchette suspendue.

3. Dispositif selon la revendication 1 ou 2, **caractérisé en ce que** l'électrode de gâchette (G) du transistor à effet de champ (1) faisant office d'élément de référence peut être reliée avec une borne de potentiel d'une source de tension (9).

4. Dispositif selon l'une des revendications 1 à 3, **caractérisé en ce que** l'électrode de gâchette (G) du transistor à effet de champ (3) faisant office de capteur de mesure peut être reliée avec une borne de potentiel d'une source de tension (11).

5. Dispositif selon l'une des revendications 1 à 4, **caractérisé en ce que** l'électrode de gâchette (G) du transistor à effet de champ (1) faisant office d'élément de référence est recouverte d'une couche de passivation en céramique, en métal, en polymère organique ou en des mélanges des matériaux mentionnés, laquelle est étanche ou a un effet de blocage de diffusion par rapport à l'au moins une substance à détecter.

6. Dispositif selon la revendication 5, **caractérisé en ce que** la couche de passivation présente plusieurs couches de matériau.

7. Dispositif selon l'une des revendications 1 à 4, **caractérisé en ce que** l'électrode de gâchette (G) du transistor à effet de champ (1) faisant office d'élément de référence présente une métallisation de gâchette de 1 µm - 100 µm d'épaisseur et non poreuse qui est étanche ou a un effet de blocage de diffusion par rapport à l'au moins une substance à détecter.

8. Procédé de détection d'au moins une substance contenue dans un courant de fluide en utilisant un dispositif selon l'une des revendications 1 à 7, un potentiel constant étant appliqué à la ligne de signal (5) et le courant qui circule dans la ligne de signal (5) étant mesuré.

9. Procédé selon la revendication 8, **caractérisé en ce qu'**une source de tension (9) est reliée avec l'électrode de gâchette (G) du transistor à effet de champ (1) faisant office d'élément de référence et présente une tension de compensation.

10. Procédé selon la revendication 8 ou 9, **caractérisé en ce qu'**une source de tension (11) qui est reliée avec l'électrode de gâchette (G) du transistor à effet de champ (3) faisant office de capteur de mesure et une source de tension (9) qui est reliée avec l'électrode de gâchette (G) du transistor à effet de champ (1) faisant office d'élément de référence présentent une tension différente de 0 V, la source de tension (9) qui est reliée avec l'électrode de gâchette (G) du transistor à effet de champ (1) faisant office d'élément de référence ayant soit une tension de 0 V, soit une tension de compensation (U_{Komp}) différente de 0 V.

11. Procédé selon les revendications 9-10, **caractérisé en ce que** le courant dans la ligne de signal (5) est en plus maintenu constant en modifiant la tension de l'une des sources de tension (9, 11) qui est reliée avec une des électrodes de gâchette (G) du transistor à effet de champ (1) faisant office d'élément de référence ou du transistor à effet de champ (3) faisant office de capteur de mesure, la modification de la tension représentant le signal de mesure.

12. Procédé de détection d'au moins une substance contenue dans un courant de fluide en utilisant un dispositif selon l'une des revendications 1 à 7, **caractérisé en ce que** le courant dans la ligne de signal (5) est maintenu constant et le potentiel de la ligne de signal (5) qui est nécessaire pour maintenir le courant constant est mesuré en tant que signal de mesure.
